# EUROPÄISCHE PATENTSCHRIFT

(11) **EP 3 790 779 B1**
(45) Veröffentlichungstag und Bekanntmachung des Hinweises auf die Patenterteilung: **03.04.2024**
(21) Anmeldenummer: 19733669.6
(22) Anmeldetag: 05.06.2019
(51) Int. Cl.: B61C 17/12, B61L 15/00

(54) **SCHIENENFAHRZEUG MIT EINER ANTRIEBSSTEUERUNG**
RAIL VEHICLE WITH A DRIVE CONTROLLER
VÉHICULE FERROVIAIRE AVEC UNE COMMANDE D'ENTRAÎNEMENT

(30) Priorität: 03.07.2018 DE 102018210926
(43) Veröffentlichungstag der Anmeldung: 17.03.2021
(73) Patentinhaber: Siemens Mobility GmbH, 81739 München (DE)
(72) Erfinder: ZENK, Ralph, 82194 Gröbenzell (DE)
(74) Vertreter: Siemens Patent Attorneys
(86) Internationale Anmeldenummer: PCT/EP2019/064562
(87) Internationale Veröffentlichungsnummer: WO 2020/007556

(56) Entgegenhaltungen:
- WO-A1-2008/009443
- DE-A1-102009 025 552
- DE-A1-102009 025 553
- JP-A- 2003 079 009

## Beschreibung

Die Erfindung betrifft ein Schienenfahrzeug, insbesondere ein Triebfahrzeug (Triebzug) oder eine Lokomotive. Darüber hinaus betrifft die Erfindung eine Bedieneinrichtung für eine Antriebssteuerung eines Schienenfahrzeugs. Außerdem betrifft die Erfindung ein Verfahren zur Bedienung einer Antriebssteuerung eines Schienenfahrzeugs.

Bei Schienenfahrzeugen kommen unterschiedliche Bedienphilosophien und Systeme zum Fahren und Bremsen zum Einsatz. Typischerweise umfasst die Bedieneinrichtung im Führerraum des Fahrzeugs mehrere Bedienhebel, die zur Steuerung von Fahr- und Bremsfunktionen verwendet werden. Außerdem kann das Fahrzeug in verschiedenen Betriebsarten betrieben werden, so beispielsweise in der Betriebsart "Fahren/Bremsen" oder in der Betriebsart "Zugkraftvorgabe/Geschwindigkeitsvorgabe".

Die Betriebsart des Schienenfahrzeugs wird zumeist aufgrund des Fahrplans und weiterer bahnspezifischer Rahmenbedingungen durch den Fahrzeugführer eingestellt. Außerdem kann der Fahrzeugführer die Fahrgeschwindigkeit auf bestimmten Streckenabschnitten geeignet wählen.

In modernen Fahrzeugen kommt als spezielle fahrzeugtechnische Einrichtung eine Automatische Fahr- und Bremssteuerung (AFB) zum Einsatz. Aufgabe der AFB ist es, das Schienenfahrzeug auf eine vom Fahrzeugführer vorgewählte oder streckenseitig zugelassene Sollgeschwindigkeit (Vₛₒₗₗ) zu beschleunigen oder abzubremsen und diese Geschwindigkeit weiter zu halten. Dazu kann von dem Fahrzeugführer mittels eines Vₛₒₗₗ-Stellers eine Geschwindigkeit vorgegeben werden. Die AFB stellt dann die nötigen Zug- oder Bremskräfte automatisch ein. Bei Verwendung einer solchen AFB dient einer der Bedienhebel der Bedieneinrichtung im Führerraum des Fahrzeugs als Vₛₒₗₗ-Steller.

Der Fahrzeugführer kann auch eine andere Betriebsart wählen, in der die Zugkraft bzw. die Bremskraft manuell vorgegeben wird. Durch das manuelle Regeln der Zug- bzw. Bremskräfte wird dabei die zulässige Fahrgeschwindigkeit eingehalten. Zu diesem Zweck ist ein weiterer Bedienhebel der Bedieneinrichtung im Führerraum des Fahrzeugs als kombinierter Fahr-/Bremshebel ausgebildet. Damit lässt sich die gewünschte Zug- oder Bremskraft vorgeben.

Die Umschaltung zwischen verschiedenen Betriebsarten erfolgt in der Regel über zusätzliche Bedienelemente der Bedieneinrichtung, wie beispielsweise mechanische Taster, oder über ein im Führerraum angeordnetes, beispielsweise in einer Bedienkonsole integriertes Touchdisplay, mit dem ein virtueller Schalter realisiert wird. Je nach Ausführung der Bedieneinrichtung kann es bei bestimmten Betriebsarten des Fahrzeugs vorkommen, dass nur ausgewählte Bedienhebel für eine Bedienung der Antriebssteuerung benötigt werden, während andere Bedienhebel der Bedieneinrichtung zeitweise funktionslos sind.

Weitere Bedienhebel können zur Ansteuerung der verschiedenen Bremssysteme des Schienenfahrzeugs vorgesehen sein, wie beispielsweise der hydraulischen oder pneumatischen Bremsen oder der elektrodynamischen Bremsen.

Aus der Druckschrift DE 10 2009 025 553 A1 ist für ein Schienenfahrzeug, welches Antriebsmittel und Bremsmittel sowie eine Antriebssteuerung zur Steuerung der Antriebsmittel und Bremsmittel, um die Fahrgeschwindigkeit des Schienenfahrzeugs zu beeinflussen, umfasst, eine Bedieneinrichtung für die Antriebssteuerung vorgesehen. Die Bedieneinrichtung umfasst Mittel zum Ändern der Betriebsart des Schienenfahrzeugs. Außerdem umfasst die Bedieneinrichtung einen von dem Fahrzeugführer des Schienenfahrzeugs bedienbaren Bedienhebel zur Bedienung der Antriebssteuerung, wobei der Bedienhebel zur Bedienung der Antriebssteuerung in eine erste Bewegungsrichtung bewegbar ist und wobei der Bedienhebel zum Ändern der Betriebsart dient.

Aus der Druckschrift JP 2003 079009 A ist als Stand der Technik ein Bedienhebel bekannt, welcher zur Umsetzung einer Betriebseinschränkung mit einem Druckknopf und einer Schubstange versehen ist, wobei die Schubstange mittels des Druckknopfes senkrecht zur Rotationsachse des Bedienhebel so weit verschiebbar ist, dass ein Stopper in die Bewegungsbahn der Schubstange ragt. Darüber hinaus offenbart die Druckschrift JP 2003 079009 A einen Bedienhebel, welcher zur Umsetzung einer Betriebseinschränkung in einer Kulisse geführt ist.

Darüber hinaus offenbart auch die die Druckschrift WO 2008/009443 A1 eine Bedieneinrichtung für eine Antriebssteuerung eines Schienenfahrzeugs.

Eine Aufgabe der vorliegenden Erfindung ist es, die Bedienung von Schienenfahrzeugen zu vereinfachen. Diese Aufgabe wird durch die Gegenstände der unabhängigen Ansprüche gelöst. Vorteilhafte Ausführungen der Erfindung sind in den Unteransprüchen angegeben.

Die im Folgenden im Zusammenhang mit dem erfindungsgemäßen Schienenfahrzeug und der erfindungsgemäßen Bedieneinrichtung erläuterten Vorteile und Ausgestaltungen gelten sinngemäß auch für das erfindungsgemäße Verfahren und umgekehrt.

Eine Kernidee der Erfindung ist es demnach, die Antriebssteuerung des Schienenfahrzeugs derart auszuführen, dass die Funktion des Bedienhebels für die Antriebssteuerung von der gewählten, aktuellen Betriebsart des Schienenfahrzeugs abhängig ist. Anders ausgedrückt erfüllt der Bedienhebel je nach Betriebsart verschiedene Funktionen.

Die Erfindung schlägt eine Verringerung der Anzahl der benötigten Bedienhebel durch Einsatz eines multifunktionalen Bedienhebels vor. Je nach gewählter Betriebsart ändert sich dabei die Funktion des Bedienhebels, d.h. es ändert sich seine Bedeutung für die Bedienung der Antriebssteuerung. Die Verwendung eines solchen Bedienhebels mit Funktionsumschaltung ermöglicht es, die Anzahl der für eine Bedienung eines Schienenfahrzeugs benötigten Bedienelemente zu verringern. Hierdurch werden die Materialkosten reduziert und der Aufwand für Verdrahtung, Inbetriebnahme und Wartung der Bedienelemente verringert sich. Mit Hilfe der Erfindung kann darüber hinaus ausgeschlossen werden, dass Bedienhebel der Bedieneinrichtung zeitweise ohne Funktion sind. Hierdurch lässt sich sowohl der Aufbau der Bedieneinrichtung als auch deren Bedienung vereinfachen.

Wesentlich für die Erfindung ist, dass mit jeder Betriebsartumschaltung zwangsläufig auch eine Änderung der Funktion des Bedienhebels erfolgt. Die Änderung der Betriebsart ist mit anderen Worten stets mit einer Änderung der Funktion des Bedienhebels verknüpft. Dies erfolgt vorzugsweise derart, dass eine Funktionslosigkeit des Bedienhebels stets vermieden wird.

In einer besonders bevorzugten Ausführungsform der Erfindung bleibt die Funktionsweise des Bedienhebels trotz seiner verschiedenen Funktionen für die Antriebssteuerung unverändert. Der Fahrzeugführer muss daher keine unterschiedlichen Bedienkonzepte erlernen.

Die betriebsartabhängige Funktionsänderung des Bedienhebels bezieht sich vorzugsweise ausschließlich auf die Bedeutung der von dem Bedienelement an die Antriebssteuerung übertragenen Signale für deren Verwendung zur Steuerung der Antriebs- und Bremsmittel. Anders ausgedrückt verändert sich lediglich die Bedeutung der von dem Bedienhebel erzeugten Signale. Die Funktionsweise, also die Art und Weise der Bedienung des Bedienhebels, bleibt hingegen vorzugsweise unverändert. Mit anderen Worten ändert sich in einer bevorzugten Ausführungsform der Erfindung die Funktion des Bedienhebels unter Beibehaltung seiner Funktionalität. Die Funktionsweise des Bedienhebels, also die Art und Weise seiner Bedienung, bleibt trotz seiner verschiedenen Funktionen für die Antriebssteuerung unverändert. Der Fahrzeugführer muss daher keine unterschiedlichen Bedienkonzepte erlernen.

Erfindungsgemäß dient der Bedienhebel selbst zum Ändern der Betriebsart und damit zur Änderung seiner eigenen Funktion. Dadurch entfällt die Notwendigkeit eines separaten Umschaltelements und die Bedieneinrichtung wird weiter vereinfacht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:
FIG 1 eine schematische Darstellung der Erfindung,
FIG 2 eine Draufsicht auf eine Bedienkonsole der Antriebssteuerung bei einer ersten Betriebsart,
FIG 3 eine Draufsicht auf die Bedienkonsole aus FIG 2 bei einer zweiten Betriebsart (erste Variante),
FIG 4 eine Draufsicht auf die Bedienkonsole aus FIG 2 bei einer zweiten Betriebsart (zweite Variante, erste Hebelstellung),
FIG 5 eine Draufsicht auf die Bedienkonsole aus FIG 2 bei einer zweiten Betriebsart (zweite Variante, zweite Hebelstellung) .

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

Ein Schienenfahrzeug 1, hier eine Lokomotive, weist geeignete Antriebsmittel 2 und Bremsmittel 3 zum Antreiben und Bremsen des Schienenfahrzeugs 1 auf sowie eine Antriebssteuerung 4 zur Steuerung der Antriebsmittel 2 und Bremsmittel 3, um die Fahrgeschwindigkeit des Schienenfahrzeugs 1 zu beeinflussen. In dem Führerraum (nicht abgebildet) der Lokomotive 1 befindet sich eine Bedieneinrichtung 5 für die Antriebssteuerung 4. Die Bedieneinrichtung 5 umfasst eine Bedienkonsole 6 mit einem von dem Fahrzeugführer bedienbaren Bedienhebel 7 zur Bedienung der Antriebssteuerung 4. Im illustrierten Beispiel weist der Bedienhebel 7 an seinem freien Ende einen Handknauf 8 auf. Der Bedienhebel 7 kann auch als Joystick ausgeführt sein und/oder beliebig ergonomisch geformt sein. Der Schaft (nicht dargestellt) des Bedienhebels 7 ist mit einer Sensorik (nicht dargestellt) der Antriebssteuerung 4 verbunden, welche die Bewegung und/oder die Stellung des Bedienhebels 7 erfasst und entsprechende Steuersignale für die Antriebs- und Bremsmittel 2, 3 erzeugt.

Unmittelbar neben dem Bedienhebel 7 ist in der Bedienkonsole 6 ein dem Bedienhebel 7 zugeordnetes Anzeigegerät 9 vorgesehen, beispielsweise in Form eines elektronischen Displays. In einer alternativen Ausführung kann ein Anzeigegerät 9 auch als Teil des Bedienhebels 7 selbst ausgeführt sein (nicht dargestellt).

Die Bedieneinrichtung 5 umfasst Mittel zum Ändern der Betriebsart des Schienenfahrzeugs 1 von der Betriebsart "Fahren/Bremsen" in die Betriebsart "Zugkraftvorgabe/Geschwindigkeitsvorgabe" und zurück. In dem hier gezeigten Fall dient, wie nachfolgend genauer erläutert, der Bedienhebel 7 selbst zum Ändern der Betriebsart und damit zur Änderung seiner eigenen Funktion.

Durch die Betätigung des Bedienhebels 7 sind Eingangssignale für die Antriebssteuerung 4 erzeugbar. Diese Eingangssignale dienen der Antriebssteuerung 4 zur Steuerung der Antriebs- und Bremsmittel 2, 3. Dabei hängt die Bedeutung dieser Eingangssignale für die Steuerung der Antriebs- und Bremsmittel 2, 3 von der gewählten, aktuellen Betriebsart der Lokomotive 1 ab. Das bedeutet, dass die Funktion des Bedienhebels 7 von der Betriebsart abhängt. Abhängig von der gewählten Betriebsart der Lokomotive 1 stellen die von dem Bedienhebel 7 an die Antriebssteuerung 4 übertragenen, von der Bewegung des Bedienhebels 7 abhängigen Eingangssignale somit hinsichtlich ihrer Bedeutung für die Steuerung der Antriebs- und Bremsmittel 2, 3 verschiedenartige Eingangsgrößen für die Antriebssteuerung 4 dar. Anders ausgedrückt werden diese Eingangssignale abhängig von der Betriebsart auf verschiedene Art und Weise verwendet. Die Art der von dem Bedienhebel 7 an die Antriebssteuerung 4 übertragenen, hebelbewegungsabhängigen Signale ist dabei in allen Fällen identisch. Lediglich die Bedeutung, die die Antriebssteuerung 4 den empfangenen Signalen zumisst, unterscheidet sich, sowie in der Folge die Verarbeitung dieser Signale durch die Antriebssteuerung 4.

Der Bedienhebel 7 ist somit wahlweise als Geschwindigkeitswähler 11 zum Einstellen der Sollgeschwindigkeit (Vsoll) oder als kombinierter Fahr-/Bremshebel 12 verwendbar. Entsprechend der beiden relevanten Betriebsarten handelt es sich bei den beiden Funktionsmodi des Bedienhebels 7 zum einen um die Funktion als Geschwindigkeitswähler (Geschwindigkeitssollwertsteller) und zum anderen um die Funktion als Zugkraft-/Bremskraftwähler.

Der Bedienhebel 7 ist zur Erzeugung von Eingangssignalen für die Antriebssteuerung 4 in eine erste Bewegungsrichtung 13 bewegbar. Diese Bedienbewegung erfolgt vorzugsweise entlang einer ersten Achse. Im illustrierten Beispiel ist der Bedienhebel 7 in einer Kulisse 14 der Bedienkonsole 6 linear bewegbar.

Dabei erfolgt die Bewegung des Bedienhebels 7 bei sich ausschließenden Bedienaktionen, wie z.B. Beschleunigen und Bremsen, in entgegengesetzte Richtungen, also beispielsweise ausgehend von einer Nullstellung 15, hier der Mittelstellung zwischen der vordersten Stellung 16 und der hintersten Stellung 17, in der Kulisse 14 nach vorn oder hinten (im Bild oben und unten). Die Kulisse 14 ist derart ausgeführt, dass der Bedienhebel 7 aufgrund einer federunterstützten Rasteinrichtung in der Nullstellung 15 einrastet, sich jedoch durch Überwindung der Rastkräfte aus der Nullstellung 15 in beide Richtungen entlang der ersten Achse herausbewegen lässt.

Es sind außerdem Leuchtmittel 18 vorgesehen, beispielsweise unter Verwendung von LED-Technik, die zumindest Teile des Bedienhebels 7 und/oder Teile der den Bedienhebel 7 tragenden Bedienkonsole 6 in Abhängigkeit von der gewählten Betriebsart und/oder in Abhängigkeit von der aktuellen Funktion des Bedienhebels 7 verschiedenfarbig beleuchten. Durch eine solche farbige Ausleuchtung des Bedienhebels 7 oder der Konsole 6 werden dem Fahrzeugführer die gewählte Betriebsart und damit die eingestellte Funktion des Bedienhebels 7 schnell und sicher angezeigt.

Bei dem Display 9, das sich unmittelbar neben dem Bedienhebel 7 befindet, handelt es sich vorzugsweise um ein Farbdisplay. Es zeigt, vorzugsweise durch entsprechende Farbwahl der Anzeige, ebenfalls die gewählte Betriebsart und/oder die aktuelle Funktion des Bedienhebels 7 an. Auf dieser Anzeige können zusätzlich Soll- und Istwerte 19 relevanter Betriebsdaten oder Meldungen, wie beispielsweise Störmeldungen, und Betriebshinweise angezeigt werden, so dass weitere Bedienhebel oder Anzeigegeräte für eine Bedienung der Antriebssteuerung 4 nicht zwingend benötigt werden. Eine Bedieneinheit, bestehend aus Bedienhebel 7 und zugeordnetem Anzeigegerät 9, wäre in Verbindung mit der Antriebssteuerung 4 für den Fahrbetrieb der Lokomotive 1 ausreichend.

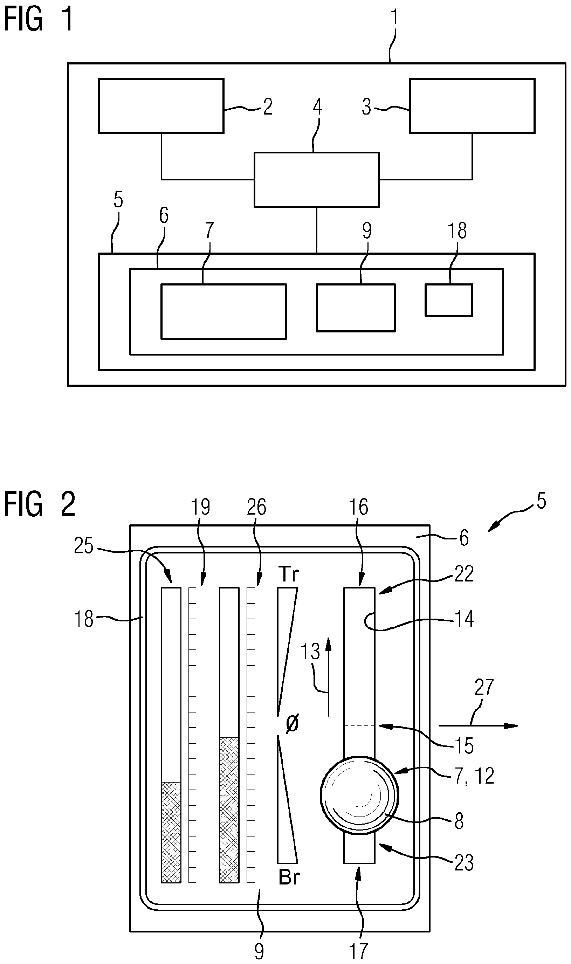

In FIG 2 beispielhaft dargestellt ist eine Bedienkonsole 6 mit integrierter Anzeige 9 und Bedienhebel 7. Der Bedienhebel 7 dient als Fahr-/Bremshebel 12. Die gesamte Beleuchtung des Bedienhebels 7 sowie die Anzeige erfolgt beispielsweise in gelber Farbe. Der Bedienhebel 7 lässt sich über eine Nullstellung 15 hinaus linear, entlang einer Achse, nach vor (im Bild nach oben) bzw. nach hinten (im Bild nach unten) in der Kulisse 14 bewegen. Dabei ist ein erster Bewegungsbereich 22 für den Bedienhebel 7 zwischen der Nullstellung 15 und der vordersten Stellung 16 und eine entsprechende Zugkraftanzeige in einem ersten Anzeigebereich 25 vorgesehen. Ein zweiter Anzeigebereich 26 für die Bremskraftanzeige ist der Bewegung des Bedienhebels 7 in einem zweiten Bewegungsbereich 23 zugeordnet, der zwischen der Nullstellung 15 und der hintersten Stellung 17 liegt.

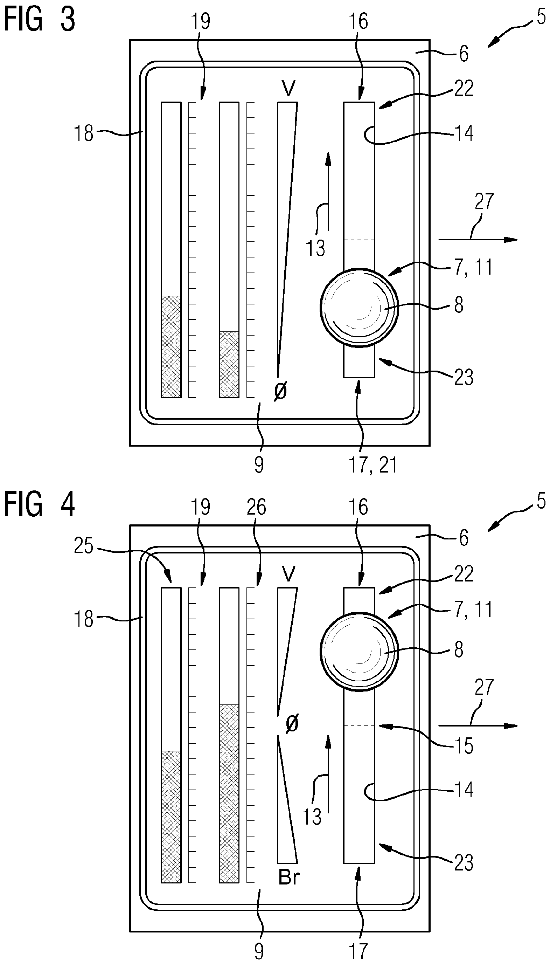

In FIG 3 ist derselbe Bedienhebel 7 dargestellt. Nach Umschaltung der Betriebsart dient der Bedienhebel 7 jedoch als Geschwindigkeitssollwertsteller 11. Beleuchtung 18 und Anzeige des Displays 9 erfolgen beispielsweise in blauer Farbe. Wenngleich keine Mittelstellung des Bedienhebels 7 vorgesehen ist und die hinterste Stellung 17 des Bedienhebels 7 als Nullstellung 21 dient, so ist doch die Funktionalität (Bedienbarkeit) des Bedienhebels 7 unverändert, d.h. die Bedienbewegung erfolgt in der Kulisse 14 entlang der ersten Achse von einer hintersten Stellung 17 in eine vorderste Stellung 16 und zurück. Die von dem Bedienhebel 7 an die Antriebssteuerung 4 übertragenen Bediensignale haben jedoch eine andere Bedeutung und werden entsprechend anders von der Antriebssteuerung 4 verarbeitet.

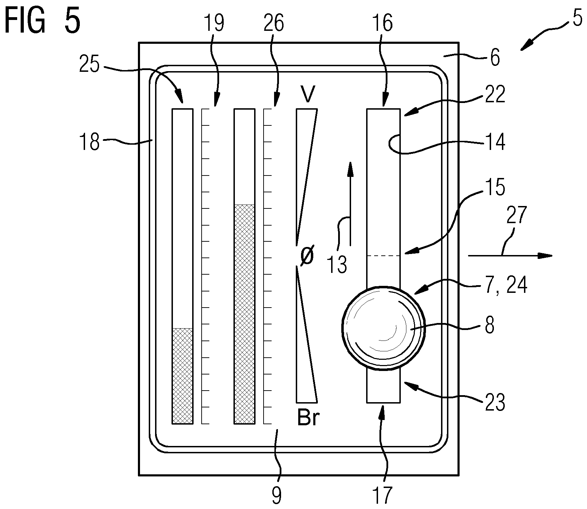

In den FIG 4 und 5 ist eine alternative Funktionsweise des Bedienhebels 7 nach Umschaltung der Betriebsart abgebildet. Dabei dient der Bedienhebel 7 in einem ersten Bewegungsbereich 22 entlang seiner Bedienbewegungsrichtung 13, nämlich zwischen der Nullstellung 15 und der vordersten Stellung 16 des Bedienhebels 7, als Geschwindigkeitssollwertsteller 11 (FIG 4) und in einem zweiten Bewegungsbereich 23 entlang seiner Bedienbewegungsrichtung 13, nämlich zwischen der Nullstellung 15 und der hintersten Stellung 17 des Bedienhebels 7, als Bremskraftwähler 24 (FIG 5). In diesem Fall ist ein manueller Bremseingriff auch dann jederzeit möglich, wenn der Bedienhebel 7 als Geschwindigkeitswähler 11 dient.

Der erste Bewegungsbereich 22 und die entsprechenden Geschwindigkeits-Sollwertanzeige in dem ersten Anzeigebereich 25, welcher dem ersten Bewegungsbereich 22 des Bedienhebels 7 zugeordnet ist, sind beispielsweise in blauer Farbe beleuchtet, während der zweite Bewegungsbereich 23 und die entsprechende Bremskraftanzeige in dem zweiten Anzeigebereich 26, welcher dem zweiten Bewegungsbereich 23 des Bedienhebels 7 zugeordnet ist, beispielsweise in gelber Farbe beleuchtet sind. Wie bei dem in FIG 2 gezeigten Beispiel ist die Mittelstellung 15 des Bedienhebels 7 als Nullstellung ausgeführt.

Zum Ändern der Betriebsart lässt sich der Bedienhebel 7 in eine von der ersten Bewegungsrichtung 13 verschiedene zweite Bewegungsrichtung 27 bewegen. Diese Umschaltbewegung erfolgt vorzugsweise entlang einer zweiten Achse. In den gezeigten Beispielen verläuft die zweite Bewegungsrichtung 27 senkrecht zu der ersten Bewegungsrichtung 13. Die Umschaltbewegung ist anders ausgedrückt vorzugsweise eine lineare Bewegung, die quer zu der Kulisse 14 ausgeführt wird. Vorzugsweise ist die Umschaltbewegung, also die Bewegung des Bedienhebels 7 zum Ändern der Betriebsart, unabhängig von der aktuellen, betriebsartabhängigen Funktion des Bedienhebels 7, d.h. stets die gleiche.

Außerdem lässt sich der Bedienhebel 7 nur aus einer definierten Hebelstellung heraus in diese zweite Bewegungsrichtung 27 bewegen, wobei der Bedienhebel 7 durch eine Bewegung in die erste Bewegungsrichtung 13 in diese Umschaltstellung gebracht werden kann. In den Beispielen nach FIG 2 und FIG 4, 5 kann die Umschaltung nur aus der Nullstellung (Mittelstellung) 15 heraus erfolgen. Die Umschaltung zwischen den verschiedenen Betriebsarten und damit zugleich die Funktionsumschaltung für den Bedienhebel 7 erfolgt somit durch eine Seitwärtsbewegung des Bedienhebels 7 aus seiner Nullstellung 15 heraus, wodurch ein mit der Antriebssteuerung 4 verbundener Umschaltkontakt (nicht dargestellt) betätigt wird.

Da die Nullstellung des Bedienhebels 7 vorzugsweise als Raststellung ausgeführt ist, stellt die Raststellung regelmäßig die Umschaltstellung dar, von der aus der Bedienhebel 7 die Umschaltbewegung vollführen kann. Es kann dann, je nach Ausführung der Bedienhebelfunktion, bei einer Änderung der Betriebsart und der damit verbundenen Funktionsumschaltung des Bedienhebels 7 erforderlichenfalls eine Änderung (Verschiebung) der Position der Raststellung vorgesehen sein. Diese Positionsänderung kann beispielsweise mit Hilfe einer elektromechanischen Umschaltvorrichtung (nicht abgebildet) erfolgen, mit deren Hilfe die Raststellung von einer ersten Umschaltstellung, z.B. der Mittelstellung 15, in eine andere gewünschte Umschaltstellung entlang der Kulisse 14 bewegbar ist, beispielsweise in die hinterste Stellung 17 des Bedienhebels 7 (Nullstellung 21).

Alternativ kann die Umschaltung auch in anderen (beliebigen) Stellungen des Bedienhebels 7 erfolgen, wie beispielsweise bei dem Beispiel nach FIG 3, jedoch vorzugweise nur dann, wenn dadurch keine unerwünschten Zustände entstehen. Dies wird durch die Verwendung einer geeigneten Software sichergestellt, welche die Möglichkeit des Entstehens unerwünschter Zustände prüft und erforderlichenfalls die manuelle Umschaltung der Betriebsart sperrt, sofern diese zu einem bestimmten Zeitpunkt und/oder aus einer bestimmten Stellung heraus erfolgen soll.

Alternativ zu einer Umschaltung zwischen den Funktionen durch eine Bewegung des Bedienhebels 7 selbst kann es auch vorgesehen sein, dass die Umschaltung mit Hilfe eines zusätzlichen Tasters (nicht gezeigt) erfolgt, der im bzw. am Bedienhebel 7 oder in der Bedienkonsole 6 im Führerhaus der Lokomotive 1 vorgesehen ist, in welcher der Bedienhebel 7 eingebaut ist.

In einem Beispielfall arbeitet der Fahrzeugführer zunächst beim Rangieren mit einem kombinierten Fahr-/Bremshebel 7, 12. Nach dem Verlassen des Stationsbereiches ändert der Fahrzeugführer die Betriebsart, indem er die AFB einschaltet. Das Umschalten der Betriebsart erfolgt mit dem Bedienhebel 7. Der Bedienhebel 7, der bisher als Zug-/Bremskraftwähler 12 zur manuellen Wahl der Zugkraft gedient hat, funktioniert jetzt als Geschwindigkeitssollwertwähler 11. Die Befehle des Fahrzeugführers werden über den Bedienhebel 7 erfasst und als Signale der Antriebssteuerung 4 übergeben.

Die Erfindung betrifft auch die beschriebene Bedieneinrichtung 5 für eine Antriebssteuerung 4 sowie die Antriebssteuerung 4 mit einer solchen Bedieneinrichtung 5 sowie ein Verfahren zur Bedienung einer solchen Antriebssteuerung 4.

Obwohl die Erfindung im Detail durch das bevorzugte Ausführungsbeispiel näher illustriert und beschrieben wurde, so ist die Erfindung nicht auf die offenbarten Beispiele eingeschränkt und andere Variationen können vom Fachmann hieraus abgeleitet werden, ohne den Schutzumfang der Erfindung zu verlassen.

### Bezugszeichenliste

1 Schienenfahrzeug, Lokomotive
2 Antriebsmittel
3 Bremsmittel
4 Antriebssteuerung
5 Bedieneinrichtung
6 Bedienkonsole
7 Bedienhebel
8 Handknauf
9 Anzeigegerät, Display
10 (frei)
11 Geschwindigkeitswähler
12 kombinierter Fahr-/Bremskraftwähler
13 erste Bewegungsrichtung
14 Kulisse
15 Nullstellung, Mittelstellung
16 vorderste Stellung
17 hinterste Stellung
18 Leuchtmittel
19 angezeigte Werte
20 (frei)
21 Nullstellung
22 erster Bewegungsbereich
23 zweiter Bewegungsbereich
24 Bremskraftwähler
25 erster Anzeigebereich
26 zweiter Anzeigebereich
27 zweite Bewegungsrichtung

## Patentansprüche

1. Schienenfahrzeug (1), insbesondere Triebfahrzeug oder Lokomotive,
- mit Antriebsmitteln (2) und mit Bremsmitteln (3),
- mit einer Antriebssteuerung (4) zur Steuerung der Antriebsmittel (2) und Bremsmittel (3) des Schienenfahrzeugs (1),
- mit einer Bedieneinrichtung (5) für die Antriebssteuerung (4),
wobei die Bedieneinrichtung (5) Mittel zum Ändern der Betriebsart des Schienenfahrzeugs (1) umfasst,
wobei die Bedieneinrichtung (5) einen von dem Fahrzeugführer des Schienenfahrzeugs (1) bedienbaren Bedienhebel (7) zur Bedienung der Antriebssteuerung (4) umfasst,
wobei die Funktion des Bedienhebels (7) von der Betriebsart des Schienenfahrzeugs (1) abhängig ist,
wobei der Bedienhebel (7) zur Bedienung der Antriebssteuerung (4) in eine erste Bewegungsrichtung (13) bewegbar ist und wobei der Bedienhebel (7) zum Ändern der Betriebsart dient,
**dadurch gekennzeichnet, dass**
der Bedienhebel (7) zum Ändern der Betriebsart in eine von der ersten Richtung (13) verschiedene, zu der ersten Richtung (13) senkrecht verlaufende zweite Bewegungsrichtung (27) bewegbar ist,
wobei der Bedienhebel (7) nur aus einer definierten Hebelstellung (15) heraus in diese zweite Bewegungsrichtung (27) bewegbar ist, wobei diese Hebelstellung (15) von dem Bedienhebel (7) durch eine Bewegung in die erste Bewegungsrichtung (13) einnehmbar ist.

2. Schienenfahrzeug (1) nach Anspruch 1,
**dadurch gekennzeichnet, dass**
durch die Betätigung des Bedienhebels (7) Eingangssignale für die Antriebssteuerung (4) erzeugbar sind, wobei die Bedeutung dieser Eingangssignale für die Steuerung der Antriebs- und Bremsmittel (2, 3) von der Betriebsart abhängt.

3. Schienenfahrzeug (1) nach einem der Ansprüche 1 oder 2,
**dadurch gekennzeichnet, dass**
der Bedienhebel (7) wahlweise als Geschwindigkeitswähler (11) zum Einstellen der Sollgeschwindigkeit des Schienenfahrzeugs (1) oder als kombinierter Fahr-/Bremshebel (12) verwendbar ist.

4. Schienenfahrzeug (1) nach einem der Ansprüche 1 bis 3,
**dadurch gekennzeichnet, dass**
die Bedieneinrichtung (5) Leuchtmittel (18) zum Beleuchten zumindest von Teilen des Bedienhebels (7) und/oder von Teilen einer den Bedienhebel (7) tragenden Bedienkonsole (6) in Abhängigkeit von der gewählten Betriebsart und/oder der aktuellen Funktion des Bedienhebels (7) umfasst.

5. Schienenfahrzeug (1) nach einem der Ansprüche 1 bis 4,
**dadurch gekennzeichnet, dass** die Bedieneinrichtung (5) ein Anzeigegerät (9) umfasst, welches die gewählte Betriebsart und/oder die aktuelle Funktion des Bedienhebels (7), und vorzugsweise zusätzliche Informationen, anzeigt.

6. Bedieneinrichtung (5) für eine Antriebssteuerung (4) eines Schienenfahrzeugs (1), insbesondere eines Triebfahrzeugs oder einer Lokomotive, welches Schienenfahrzeug (1) Antriebsmittel (2) und Bremsmittel (3) umfasst, wobei die Antriebssteuerung (4) zur Steuerung dieser Antriebsmittel (2) und Bremsmittel (3) dient, um die Fahrgeschwindigkeit des Schienenfahrzeugs (1) zu beeinflussen,
wobei die Bedieneinrichtung (5) Mittel zum Ändern der Betriebsart des Schienenfahrzeugs (1) umfasst,
wobei die Bedieneinrichtung (5) einen von dem Fahrzeugführer des Schienenfahrzeugs (1) bedienbaren Bedienhebel (7) zur Bedienung der Antriebssteuerung (4) umfasst,
wobei die Funktion des Bedienhebels (7), beim Einsatz im Schienenfahrzeug (1), von der Betriebsart des Schienenfahrzeugs (1) abhängig ist,
wobei der Bedienhebel (7) zur Bedienung der Antriebssteuerung (4) in eine erste Bewegungsrichtung (13) bewegbar ist und wobei der Bedienhebel (7) zum Ändern der Betriebsart dient,
**dadurch gekennzeichnet, dass** der Bedienhebel (7) zum Ändern der Betriebsart in eine von der ersten Richtung (13) verschiedene, zu der ersten Richtung (13) senkrecht verlaufende zweite Bewegungsrichtung (27) bewegbar ist,
wobei der Bedienhebel (7) nur aus einer definierten Hebelstellung (15) heraus in diese zweite Bewegungsrichtung (27) bewegbar ist, wobei diese Hebelstellung (15) von dem Bedienhebel (7) durch eine Bewegung in die erste Bewegungsrichtung (13) einnehmbar ist.

7. Verfahren zur Bedienung einer Antriebssteuerung (4) eines Schienenfahrzeugs (1), insbesondere eines Triebfahrzeugs oder einer Lokomotive,
welches Schienenfahrzeug (1) Antriebsmittel (2) und Bremsmittel (3) umfasst, wobei die Antriebssteuerung (4) zur Steuerung dieser Antriebsmittel (2) und Bremsmittel (3) dient, um die Fahrgeschwindigkeit des Schienenfahrzeugs (1) zu beeinflussen, und
welches Schienenfahrzeug (1) eine Bedieneinrichtung (5) für die Antriebssteuerung (4) umfasst,
wobei die Bedieneinrichtung (5) Mittel zum Ändern der Betriebsart des Schienenfahrzeugs (1) umfasst,
wobei die Bedieneinrichtung (5) einen von dem Fahrzeugführer des Schienenfahrzeugs (1) bedienbaren Bedienhebel (7) zur Bedienung der Antriebssteuerung (4) umfasst,
wobei die Funktion des Bedienhebels (7) von der Betriebsart des Schienenfahrzeugs (1) abhängig ist,
wobei der Bedienhebel (7) zur Bedienung der Antriebssteuerung (4) in eine erste Bewegungsrichtung (13) bewegt wird und wobei der Bedienhebel (7) zum Ändern der Betriebsart dient,
**dadurch gekennzeichnet, dass**
der Bedienhebel (7) zum Ändern der Betriebsart in eine von der ersten Richtung (13) verschiedene, zu der ersten Richtung (13) senkrecht verlaufende zweite Bewegungsrichtung (27) bewegt wird
wobei der Bedienhebel (7) nur aus einer definierten Hebelstellung (15) heraus in diese zweite Bewegungsrichtung (27) bewegbar ist, wobei diese Hebelstellung (15) von dem Bedienhebel (7) durch eine Bewegung in die erste Bewegungsrichtung (13) eingenommen wird.

## Claims

1. Rail vehicle (1), in particular power car or locomotive,
- with driving means (2) and with braking means (3),
- with a drive controller (4) for controlling the driving means (2) and braking means (3) of the rail vehicle (1),
- with an operating facility (5) for the drive controller (4),
wherein the operating facility (5) comprises means for changing the operating mode of the rail vehicle (1),
wherein the operating facility (5) comprises an operating lever (7) which can be used by the vehicle driver of the rail vehicle (1) to operate the drive controller (4),
wherein the function of the operating lever (7) is dependent on the operating mode of the rail vehicle (1),
wherein the operating lever (7) can be moved in a first movement direction (13) for operating the drive controller (4) and wherein the operating lever (7) serves to change the operating mode,
**characterised in that** the operating lever (7) can be moved in a second movement direction (27), which differs from the first direction (13) and preferably runs perpendicularly to the first direction (13), for changing the operating mode,
wherein the operating lever (7) can only be moved out of a defined lever position (15) in this second movement direction (27), wherein this lever position (15) can be assumed by the operating lever (7) by way of a movement in the first movement direction (13).

2. Rail vehicle (1) according to claim 1,
**characterised in that**
input signals for the drive controller (4) can be generated by actuating the operating lever (7), wherein the meaning of these input signals for controlling the driving and braking means (2, 3) depends on the operating mode.

3. Rail vehicle (1) according to one of claims 1 or 2, **characterised in that**
the operating lever (7) can optionally be used as the speed selector (11) for setting the setpoint speed of the rail vehicle (1) or as the combined driving/braking lever (12).

4. Rail vehicle (1) according to one of claims 1 to 3, **characterised in that**
the operating facility (5) comprises lighting means (18) for illuminating at least parts of the operating lever (7) and/or parts of an operator console (6) supporting the operating lever (7), depending on the selected operating mode and/or the current function of the operating lever (7).

5. Rail vehicle (1) according to one of claims 1 to 4, **characterised in that**
the operating facility (5) comprises a display device (9), which indicates the selected operating mode and/or the current function of the operating lever (7) and preferably additional information.

6. Operating facility (5) for a drive controller (4) of a rail vehicle (1), in particular a power car or a locomotive, which rail vehicle (1) comprises driving means (2) and braking means (3), wherein the drive controller (4) serves to control these driving means (2) and braking means (3) in order to influence the driving speed of the rail vehicle (1),
wherein the operating facility (5) comprises means for changing the operating mode of the rail vehicle (1),
wherein the operating facility (5) comprises an operating lever (7) which can be used by the vehicle driver of the rail vehicle (1) to operate the drive controller (4),
wherein the function of the operating lever (7) is dependent on the operating mode of the rail vehicle (1) when used in the rail vehicle (1),
wherein the operating lever (7) can be moved in a first movement direction (13) for operating the drive controller (4) and
wherein the operating lever (7) serves to change the operating mode,
**characterised in that** the operating lever (7) can be moved in a second movement direction (27), which differs from the first direction (13) and preferably runs perpendicularly to the first direction (13), for changing the operating mode,
wherein the operating lever (7) can only be moved out of a defined lever position (15) in this second movement direction (27), wherein this lever position (15) can be assumed by the operating lever (7) by way of a movement in the first movement direction (13).

7. Method for operating a drive controller (4) of a rail vehicle (1), in particular a power car or a locomotive, which rail vehicle (1) comprises driving means (2) and braking means (3), wherein the drive controller (4) serves to control these driving means (2) and braking means (3) in order to influence the driving speed of the rail vehicle (1), and
which rail vehicle (1) comprises an operating facility (5) for the drive controller (4),
wherein the operating facility (5) comprises means for changing the operating mode of the rail vehicle (1),
wherein the operating facility (5) comprises an operating lever (7) which can be used by the vehicle driver of the rail vehicle (1) to operate the drive controller (4),
wherein the function of the operating lever (7) is dependent on the operating mode of the rail vehicle (1),
wherein the operating lever (7)is moved in a first movement direction (13) for operating the drive controller (4) and wherein the operating lever (7) serves to change the operating mode,
**characterised in that** the operating lever (7) is moved in a second movement direction (27), which differs from the first direction (13) and runs perpendicularly to the first direction (13), for changing the operating mode,
wherein the operating lever (7) can only be moved out of a defined lever position (15) in this second movement direction (27), wherein this lever position (15) is assumed by the operating lever (7) by way of a movement in the first movement direction (13).

## Revendications

1. Véhicule (1) ferroviaire, en particulier motrice ou locomotive,
- comprenant des moyens (2) d'entraînement et comprenant des moyens (3) de freinage,
- comprenant une commande (4) d'entraînement pour la commande des moyens (2) d'entraînement et des moyens (3) de freinage du véhicule (1) ferroviaire,
- comprenant un dispositif (5) de manoeuvre de la commande (4) de l'entraînement,
dans lequel le dispositif (5) de manoeuvre comprend des moyens de modification du type de fonctionnement du véhicule (1) ferroviaire,
dans lequel le dispositif (5) de manoeuvre comprend pour la manoeuvre de la commande (4) de l'entraînement un levier (7) de manoeuvre pouvant être manoeuvré par le conducteur du véhicule (1) ferroviaire,
dans lequel la fonction du levier (7) de manoeuvre dépend du type de fonctionnement du véhicule (1) ferroviaire,
dans lequel le levier (7) de manoeuvre peut être déplacé pour la manoeuvre de la commande (4) de l'entraînement dans une première direction (13) de déplacement et dans lequel le levier (7) de manoeuvre sert à modifier le type de fonctionnement,
**caractérisé en ce que** le levier (7) de manoeuvre peut, pour modifier le type de fonctionnement, être déplacé dans une deuxième direction (27) de déplacement, différente de la première direction (13) et s'étendant perpendiculairement à la première direction (13),
dans lequel le levier (7) de manoeuvre ne peut être déplacé dans cette deuxième position (27) de déplacement, qu'à partir d'une position (15) définie du levier, dans lequel cette position (15) du levier peut être prise par le levier (7) de manoeuvre par un déplacement dans la première direction (13) de déplacement.

2. Véhicule (1) ferroviaire suivant la revendication 1, **caractérisé en ce que**
par l'actionnement du levier (7) de manoeuvre des signaux d'entrée pour la commande (4) de l'entraînement peuvent être produits, dans lequel la signification de ces signaux d'entrée pour la commande des moyens (2, 3) d'entraînement et de freinage dépend du type de fonctionnement.

3. Véhicule (1) ferroviaire suivant l'une des revendications 1 ou 2,
**caractérisé en ce que**
le levier (7) de manoeuvre peut être utilisé au choix comme sélecteur (11) de vitesse pour régler la vitesse de consigne du véhicule (1) ferroviaire ou comme levier (12) combiné de marche/freinage.

4. Véhicule (1) ferroviaire suivant l'une des revendications 1 à 3,
**caractérisé en ce que**
le dispositif (5) de manoeuvre comprend des moyens (18) d'éclairage pour l'éclairage d'au moins des parties du levier (7) de manoeuvre et/ou des parties d'une console (6) de manoeuvre portant le levier (7) de manoeuvre, en fonction du type de fonctionnement choisi et/ou de la fonction en cours du levier (7) de manoeuvre.

5. Véhicule (1) ferroviaire suivant l'une des revendications 1 à 4,
**caractérisé en ce que**
le dispositif (5) de manoeuvre comprend un appareil (9) indicateur, qui indique le type de fonctionnement choisi et/ou la fonction en cours du levier (7) de manoeuvre et de préférence des informations supplémentaires.

6. Dispositif (5) de manoeuvre d'une commande (4) de l'entraînement d'un véhicule (1) ferroviaire, en particulier d'une motrice ou d'une locomotive, lequel véhicule (1) ferroviaire comprend des moyens (2) d'entraînement et des moyens (3) de freinage, dans lequel la commande (4) de l'entraînement sert à la commande de ces moyens (2) d'entraînement et de ces moyens (3) de freinage afin d'influencer la vitesse de marche du véhicule (1) ferroviaire,
dans lequel le dispositif (5) de manoeuvre comprend des moyens de modification du type de fonctionnement du véhicule (1) ferroviaire,
dans lequel le dispositif (5) de manoeuvre comprend, pour la manoeuvre de la commande (4) de l'entraînement, un levier (7) de manoeuvre pouvant être manoeuvré par le conducteur du véhicule (1) ferroviaire,
dans lequel la fonction du levier (7) de manoeuvre, lors de l'utilisation dans le véhicule (1) ferroviaire, dépend du type de fonctionnement du véhicule (1) ferroviaire,
dans lequel le levier (7) de manoeuvre peut être déplacé pour la manoeuvre de la commande (4) de l'entraînement dans une première direction (13) de déplacement et dans lequel le levier (7) de manoeuvre sert à modifier le type de fonctionnement,
**caractérisé en ce que** le levier (7) de manoeuvre peut, pour modifier le type de fonctionnement, être déplacé dans une deuxième direction (27) de déplacement, différente de la première direction (13) et s'étendant perpendiculairement à la première direction (13),
dans lequel le levier (7) de manoeuvre ne peut être déplacé dans cette deuxième position (27) de déplacement, qu'à partir d'une position (15) définie du levier, dans lequel cette position (15) du levier peut être prise par le levier (7) de manoeuvre par un déplacement dans la première direction (13) de déplacement.

7. Procédé de manoeuvre d'une commande (4) de l'entraînement d'un véhicule (1) ferroviaire, en particulier d'une motrice ou d'une locomotive,
lequel véhicule (1) ferroviaire comprend des moyens (2) d'entraînement et des moyens (3) de freinage, dans lequel la commande (4) de l'entraînement sert à la commande de ces moyens (2) d'entraînement et de ces moyens (3) de freinage afin d'influencer la vitesse de marche du véhicule (1) ferroviaire et,
lequel le véhicule (1) ferroviaire comprend un dispositif (5) de manoeuvre de la commande (4) de l'entraînement,
dans lequel le dispositif (5) de manoeuvre comprend des moyens de modification du type de fonctionnement du véhicule (1) ferroviaire,
dans lequel le dispositif (5) de manoeuvre comprend, pour la manoeuvre de la commande (4) de l'entraînement un levier (7) de manoeuvre pouvant être manoeuvré par le conducteur du véhicule (1) ferroviaire,
dans lequel la fonction du levier (7) de manoeuvre dépend du type de fonctionnement du véhicule (1) ferroviaire,
dans lequel on déplace, dans une première direction (13) de déplacement, le levier (7) de manoeuvre pour la manoeuvre de la commande (4) de l'entraînement et
dans lequel le levier (7) de manoeuvre sert à modifier le type de fonctionnement,
**caractérisé en ce que**
on déplace le levier (7) de manoeuvre pour la modification du type de fonctionnement dans une deuxième direction (27), différente de la première direction (13) et s'étendant perpendiculairement à la première direction (13),
dans lequel le levier (7) de manoeuvre peut être déplacé dans cette deuxième direction (27) de déplacement, seulement à partir d'une position (15) définie du levier, dans lequel cette position (15) du levier est prise par le levier (7) de manoeuvre par un déplacement dans la première direction (13) de déplacement.
